(19) Europäisches Patentamt
European Patent Office
Office européen des brevets

(11) **EP 2 577 614 B1**

(12) **EUROPÄISCHE PATENTSCHRIFT**

(45) Veröffentlichungstag und Bekanntmachung des Hinweises auf die Patenterteilung:
**27.03.2019 Patentblatt 2019/13**

(51) Int Cl.:
**G06T 17/05** *(2011.01)*  **G06T 17/00** *(2006.01)*
**G08G 5/00** *(2006.01)*  **G01C 23/00** *(2006.01)*

(21) Anmeldenummer: **11782361.7**

(22) Anmeldetag: **25.05.2011**

(86) Internationale Anmeldenummer:
**PCT/DE2011/001105**

(87) Internationale Veröffentlichungsnummer:
**WO 2012/006983 (19.01.2012 Gazette 2012/03)**

(54) **VORRICHTUNG ZUR DARSTELLUNG VON GELÄNDE AUF EINER ANZEIGEVORRICHTUNG EINES FLUGKÖRPERS**

APPARATUS FOR DISPLAYING TERRAIN ON A DISPLAY APPARATUS OF AN AIRBORNE VEHICLE

DISPOSITIF DE REPRÉSENTATION TOPOGRAPHIQUE SUR UN DISPOSITIF INDICATEUR D'UN ENGIN VOLANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.06.2010 DE 102010022726**

(43) Veröffentlichungstag der Anmeldung:
**10.04.2013 Patentblatt 2013/15**

(73) Patentinhaber: **HENSOLDT Sensors GmbH 82024 Taufkirchen (DE)**

(72) Erfinder: **SCHAFHITZEL, Tobias 88709 Meersburg (DE)**

(74) Vertreter: **LifeTech IP Spies & Behrndt Patentanwälte PartG mbB Elsenheimerstraße 47a 80687 München (DE)**

(56) Entgegenhaltungen:
**US-A1- 2009 040 070    US-A1- 2009 303 251**

- **PAJAROLA R ED - EBERT D ET AL: "Large scale terrain visualization using the restricted quadtree triangulation", VISUALIZATION '98. PROCEEDINGS RESEARCH TRIANGLE PARK, NC, USA 18-23 OCT. 1998, PISCATAWAY, NJ, USA,IEEE, US, 18. Oktober 1998 (1998-10-18), Seiten 19-26,515, XP010321005, DOI: 10.1109/VISUAL.1998.745280 ISBN: 978-0-8186-9176-8**
- **DUBET S ED - INSTITUTE OF ELECTRICAL AND ELECTRONICS ENGINEERS: "Terrain, obstacle and airport databases for electronic flight bags", 22ND. DASC. THE 22ND. DIGITAL AVIONICS SYSTEMS CONFERENCE PROCEEDINGS. INDIANAPOLIS, IN, OCT. 12 - 16, 2003; [DIGITAL AVIONICS SYSTEMS CONFERENCE], NEW YORK, NY : IEEE, US, 12. Oktober 2003 (2003-10-12), Seiten 13.D.2-131, XP031961975, DOI: 10.1109/DASC.2003.1245956 ISBN: 978-0-7803-7844-5**

**Beschreibung**

Die Erfindung betrifft eine Vorrichtung zur Darstellung von Gelände auf einer Anzeigevorrichtung eines Flugkörpers gemäß den Merkmalen des Patentanspruchs 1.

Im Kontext sogenannter Pilotenassistenzsysteme kommen Anzeigegeräte für eine synthetische Außensicht immer dann zum Einsatz, wenn äußere Witterungsverhältnisse, Dunkelheit oder auch sogenannte Brownout / Whiteout Phasen (das Aufwirbeln von Sand oder Schnee) dem Piloten die Sicht erschweren oder sogar komplett verdecken. Gängige Methoden für die Generierung einer synthetischen Außensicht sind sogenannte Synthetic Vision Systeme (SVS) oder Enhanced Vision Systeme (EVS). Während bei SVS die darzustellenden Daten aus einer Datenbank bezogen werden, d.h. Gelände und Hindernisinformation muss bereits vorhanden sein, werden bei ESV Systemen Kameras oder Sensoren genutzt um die während des Fluges aufgenommenen Daten direkt zu verarbeiten.

Der Stand der Technik beschränkt sich im Wesentlichen auf Synthetic Vision Systeme und Enhanced Vision Systeme, wobei hier meist das Sensorbild direkt, d.h. zweidimensional, dargestellt wird.

WO 2008/018906 beschreibt die Datenvalidierung von Terrain-Datenbankdaten mittels Sensordaten. Das beschriebene Verfahren geht von einer festen Anzahl an Stützstellen aus (gegeben durch die Datenbank) und wendet die Validierung durch die aufgenommenen Sensordaten darauf an. Als Ausgabe wird hier ein Punkt als "validated, not validated oder warning area" gekennzeichnet.

US 7,148,861 B2 beschreibt eine Datenfusion zweier Datenquellen auf 2D Pixelebene. Es wird neben den Koordinatensystemen der zwei Datenquellen ein weiteweiteres, drittes Koordinatensystem eingeführt, welches den unterschiedlichen Perspektiven der Datenquellen entgegenwirken soll.

EP1 084 380 B1 beschreibt Visualisierungsmethoden von Datenbank- und Sensordaten. Weitere Offenbarungen zur Sensordatenfusion finden sich in US 2010/0026525 A1 sowie Patent US 2007/0297696 A1.

Aus US 2009/0040070 A1 ist eine Vorrichtung zur Darstellung von Gelände auf einer Anzeigevorrichtung eines Flugkörpers gemäß den Oberbegriff des Patentanspruchs 1 bekannt.

Aufgabe der Erfindung ist es eine verbesserte Vorrichtung zur Darstellung von Gelände auf einer Anzeigevorrichtung eines Flugkörpers anzugeben.

Diese Aufgabe wird mit der Vorrichtung gemäß den Merkmalen des geltenden Patentanspruchs 1 gelöst.

Die erfindungsgemäße Vorrichtung umfasst ein Synthetic Vision System mit einer Gelände- und Hindernisdatenbank, ein Enhanced Vision System mit einem Sensor zur Aufnahme von Geländedaten, ein Höhen- und Positionssensor zur Bestimmung der Flugzustandsdaten eine Anzeigevorrichtung, einen Fusionsprozessor zur Fusionierung der Daten des Synthetic Vision Systems und des Enhanced Vision Systems, wobei die von dem Enhanced Vision System aufgenommenen Datenpunkte gespeichert werden, einen Grafikprozessor, welcher die mittels des Fusionsprozessors erzeugten Geländedaten an die Anzeigevorrichtung sendet unter Berücksichtigung der mittels des Höhen- und Positionssensors bestimmten Flugzustandsdaten.

Erfindungsgemäß stellt der Fusionsprozessor ein adaptives Gitter dar, welches durch seine Zellen eine diskrete Abtastung der Erdoberfläche entspricht. Gemäß der Erfindung ist der Fusionsprozessor eingerichtet zur Speicherung der Datenpunkte in einem räumlich konstante definierten Bereich um ein festgelegtes Zentrum, wobei das Zentrum dieses Bereichs die Position des Sensors bildet und der Fusionsprozessor verwendet beim Einfügen eines Datenpunktes in das Gitter eine Fehlerfunktion, wobei die Fehlerfunktion aus dem Abstand des Datenpunktes zur in das Gitter projizierten Sensorposition eine Abschätzung für die Größe der jeweiligen Zelle liefert, in welche das Pixel gespeichert wird. Zusätzlich zum gemessenen Abstand des Pixels zur Sensorposition können auch weitere bekannte Sensor- oder navigationsspezifischen Parameter berücksichtigt werden.

Das zweidimensionale Gitternetz stellt eine Parametrisierung der Tangentialfläche der Erdkugel dar mit einer hierarchischen, nicht-regulären Struktur und einer vorgebbaren maximalen Anzahl von Zellen, wobei das Zentrum des Gitter-netzes die Position des Sensors des Enhanced Vision Systems abbildet. Die Anzahl der Zellen ist nicht konstant, da sie von der Verfeinerung der Zellstruktur abhängt. Für den Fall des maximalen Verfeinerungslevels einer Zelle, kann die daraus resultierende maximale Auflösung berechnet werden.

Der Prozessor zur Fusionierung der Daten des Synthetic Vision Systems und des Enhanced Vision Systems wird im Folgenden auch als Bodenpixelcontainer bezeichnet.

Die erfindungsgemäße Idee befasst sich mit der Kombination aus beiden Systemen, einem sogenannten Enhanced Synthetic Vision System (ESVS), d.h. der Fusion von vorhandenen Terrain- und Hindernisinformationen, welche in Datenbanken abgelegt sind, und 3D Sensordaten (z.B. LADAR, RADAR), welche bereits durch vorherige Segmentierung in klassifizierter Form vorliegen.

Die vorliegende Erfindung kombiniert die Vorteile von Synthetic Vision Systemen und Enhanced Vision Systemen, indem von einem Sensor aufgenommene 3D-Geländedaten in Echtzeit segmentiert und mit bestehenden Terrain- und Hindernisdaten aus einer Datenbank fusioniert werden. Die Segmentierung der Sensordaten entscheidet dabei auf Pixelbasis, ob das jeweilige Pixel als Teil des Terrains oder als Hindernis einzustufen ist. Die Segmentierung erfolgt dabei nach aus dem Stand der Technik bekannten Verfahren.

Während die als Hindernis klassifizierten Pixel als 3D Punktwolke behandelt werden, werden die sogenannten "Bodenpixel" in dem Bodenpixelcontainer gespeichert. Dieser Bodenpixelcontainer repräsentiert erfindungsgemäß ein adaptives Gitter (d.h. entsprechend der Genauigkeit eines Messpunktes), welches durch seine Zellen einer diskreten Abtastung der Erdoberfläche entspricht. Jede Zelle nimmt jeweils einen Datenwert auf, welcher dann als Höhenwert für die komplette räumliche Ausdehnung der Zelle zu betrachten ist. Dabei unterstützt der Bodenpixelcontainer das "See & Remember" Konzept, d.h. jeder räumliche Bereich, der einmal abgetastet wurde, wird erst im Bodenpixelcontainer und anschließend in einer Datenbank abgelegt.

Die Erfindung wird im Weiteren anhand von Zeichnungen näher erläutert. Es zeigen:

>Fig. 1 einen schematischen Aufbau der erfindungsgemäßen Vorrichtung,
>Fig. 2 eine beispielhafte Darstellung des Bodenpixelcontainers mit einer Raumunterteilungsstruktur,
>Fig. 3 eine beispielhafte Darstellung des Bodenpixelcontainers, in welchen ein Bodenpixel eingefügt ist,
>Fig. 4 eine beispielhafte Darstellung des Bodenpixelcontainers bei Positionsänderung des Sensors zur Aufnahme von Geländedaten,
>Fig. 5 eine beispielhafte Darstellung eines Ausschnitts aus dem Bodenpixelcontainer mit einer Triangulation der Daten zur Visualisierung.

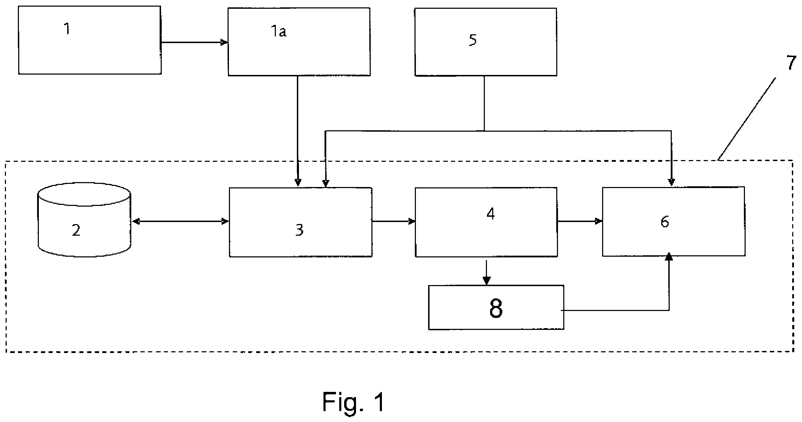

Fig. 1 zeigt einen schematischen Aufbau der erfindungsgemäßen Vorrichtung. Es ist ein Sensor 1 zur Erzeugung eines Rohdatenbildes sowie ein Modul 1a zur Segmentierung der Bodenpixel vorhanden. Außerdem ist eine Datenbarnk 2 zur Speicherung von Höhendaten vorhanden, im Weiteren auch als Elevationsdatenbank bezeichnet.

Der Sensor 1 und die Datenbank 2 sind mit dem Bodenpixelcontainer 3 verbunden. Zwischen dem Bodenpixelcontainer 3 und der Datenbank 2 besteht eine lesende und schreibende Datenbankanbindung für den Austausch von Datenbankdaten und Sensordaten.

An den Bodenpixelcontainer 3 ist zudem über eine Schnittstelle ein Visualisierungsmodul 4 angeschlossen. Ein Modul 5 zur Messung der Flugzustandsdaten ist mit dem Bodenpixelcontainer 3 und dem Visualisierungsmodul 4 verbunden. Das Visualisierungsmodul 4 ist mit einer Anzeigevorrichtung 6 zur Darstellung des Geländes verbunden. Visualisierungsmodul 4 dient im Wesentlichen dazu, die Daten mit Hilfe bekannter Visualisierungsalgorithmen geeignet aufzubereiten, so dass die Daten auf der Anzeigevorrichtung 6 angezeigt werden können.

In Fig. 1 ist mit dem Bezugszeichen 7 das ESVS-Modul bekzeichnet. ESVS steht hierbei für Enhanced Synthetic Vision System. Das ESVS-Modul 7 beinhaltet den Bodenpixelcontainer 3, das Visualisierungsmodul 4 mit den Visualisierungs- (bzw. Triangulations-) algorithmen sowie die Anzeigevorrichtung 6. Als Eingabe existiert jeweils eine Anbindung an den Sensor 1 und an die Datenbank 2. Die Ausgabe entspricht einer Anbindung an die Datenbank 2, um Daten zurückzuschreiben, und einem Geometriespeicher 8, welcher die aus den Triangulationsalgorithmen resultierende Bodenflächengeometrie enthält. Die Daten des Geometriespeichers 8 werden direkt an die Anzeigevorrichtung 6 geleitet.

Die Verarbeitungskette des ESVS-Moduls 7 erhält als Eingabe die aus dem Sensor 1 gewonnenen Rohdaten, welche als Tiefenbild oder durch Berücksichtigung der Flugzustandsdaten auch als 3D Punktwolke interpretiert werden können. Diese Punktwolke durchläuft zunächst eine Klassifikation, d.h. es wird pro aufgenommenen Datenpunkt entschieden, ob dieser als Bestandteil des Bodens zu betrachten ist oder als daraufstehendes, nicht näher klassifiziertes Objekt.

In den weiteren Erläuterungen werden ausschließlich die als "BODEN" klassifizieren Datenpunkte betrachtet. Des Weiteren werden Flugzustandsdaten aus dem Modul 5 zur Messung der Flugzustandsdaten als Eingabe benötigt, wie sie von einem Navigationssystem geliefert werden, bestehend aus: der Position im WGS84 Koordinatensystem, der Flughöhe bezogen auf MSL und den Fluglagewinkeln.

Die klassifizierten Sensorbilder, wie sie aus der Bodensegmentierung resultieren, werden zusammen mit den Flugzustandsdaten an den Bodenpixelcontainer 3 übergeben. Die Flugzustandsdaten werden außerdem in einem späteren Verarbeitungsschritt, d.h. bei der Visualisierung, ein weiteres Mal benötigt.

Der Bodenpixelcontainer 3 bildet das Kernmodul der Datenverarbeitungskette zur Fusionierung der vorhandenen Gelände- und Hindernisdaten mit den Sensorrohdaten. Er ist zuständig für die Speicherung aller gesammelten Bodenpixeldaten innerhalb eines räumlich begrenzten Bereichs, sowie für die Weiterverarbeitung dieser Daten zum Einen für die darauffolgenden Visualisierungsalgorithmen im Visualisierungsmodul 4, und zum Anderen für das Abspeichern in einer Elevationsdatenbank 2.

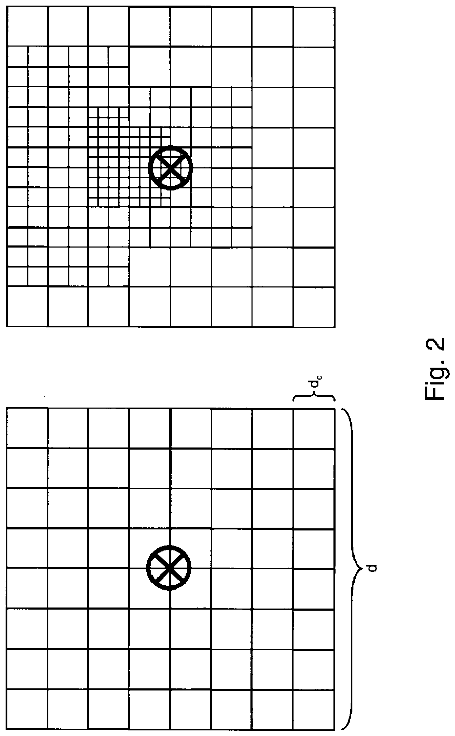

Der Bodenpixelcontainer entspricht erfindungsgemäß einem räumlich konstant definierten Bereich um ein festgelegtes Zentrum. Fig. 2 veranschaulicht den Aufbau des Containers. Der Bodenpixelcontainer als räumliche Diskretisierung mit einer definierten Seitenlänge d (linke Darstellung in Fig. 2). Die Darstellung ist als Draufsicht zu betrachten, d.h. als Parametrisierung der Tangentialfläche der Erde, wobei die Position des Sensors das Zentrum des Containers bildet. Die vom Container abgedeckte Fläche wird durch n Zellen mit Kantenlänge $d_e$ diskretisiert, welche wieder als Raumunterteilungsstrukturen, hier Quadtrees, dienen (rechte Darstellung in Fig. 2).

Ausgehend von zwei orthogonal aufeinander stehenden Tangentialvektoren in einem nordorientierten Koordinatensystem (lokal geodätisches Koordinatensystem) wird die vom Bodenpixelcontainer abgedeckte Fläche bezüglich eines zum Zeitpunkt t0 festgelegten Ursprungs aufgespannt. Anschaulich lässt sich dieser Vorgang als eine Draufsicht auf die Erdoberfläche verdeutlichen, in welcher die Sensorposition (z.B. die GPS Position des Luftfahrzeugs, an welchem der Sensor angebracht ist) das Zentrum der Fläche bildet, die der Bodenpixelcontainer verarbeitet. Diese Fläche, mit einer Seitenlänge d, welche durchaus mehrere Kilometer betragen kann, wird in n Zellen unterteilt.

Die Grundidee des Bodenpixelcontainers ist dabei, in den Zellen Höhenwerte abzulegen, was mathematisch einem Höhenfeld $f(x,y) \rightarrow z$ entspricht.

Um auftretenden Messunsicherheiten entgegenzuwirken, wurde die äquidistante, reguläre Struktur (d.h. eine konstante Zellgröße dc) des Bodenpixelcontainers durch weitere Raumunterteilungsmechanismen erweitert. Die Messunsicherheiten wirken sich im Wesentlichen auf die dreidimensionale Positionen der Bodenpixel, welche aus der Vorverarbeitung an den Bodenpixelcontainer übermittelt werden, aus. So kann man sich vorstellen, dass mechanische Sensorungenauigkeiten sowie auch die Ungenauigkeit des verwendeten (inertialen) Navigationssystems (INS) dazu beitragen, dass die Position eines Bodenpixels nicht garantiert werden kann. Mögliche Fehlerquellen sind hierbei:

- mechanische Sensorfehler im Inneren des Sensors
- Einbaufehler, z.B. durch Ungenauigkeiten bei der Montage
- INS Winkelfehler, d.h. Ungenauigkeiten der Fluglagewinkel
- INS Positionsfehler, d.h. eine ungenaue Position des Fluggerätes

Da sich die genannten Fehlerquellen nicht gleich auf jedes Bodenpixel auswirken sondern von bestimmten Faktoren abhängig sind, kann die Ungenauigkeit jedes Abtastpunktes individuell betrachtet werden.

Hierzu können 2 zusammengehörige Mechanismen verwendet werden. Zum Einen kann das ein aus dem Stand der Technik bekannter Quadtree sein. Der Quadtree dient als Raumunterteilungsstruktur dient und ausgehend von der Zellgröße dc diese in jeweils 4 gleichgroße Unterzellen zerteilt, und zum Anderen eine Fehlerfunktion fe, welche die Fehleranfälligkeit eines Abtastpunktes in Abhängigkeit definierter Parameter ausdrückt. Ein einfaches Beispiel hierfür wäre

$$f_e(dist) = f_{Sensor} + 4 * \sigma(\vec{e}),$$

wobei hier ein distanzabhängiger Fehler in Abhängigkeit eines konstanten Sensorfehlers und des 4-Sigma Wertes, d.h. des maximales Winkelfehlers des INS, berechnet wird. Diese Fehlerfunktion würde sich linear verhalten und soll später noch einmal zur Verdeutlichung herangezogen werden.

Ausgehend von Fig. 2 (linke Darstellung) wird der Quadtree nun auf jede Zelle angewendet. Im Detail bedeutet dies, dass jede Zelle des Bodenpixelcontainers den gröbsten betrachteten Level, also der gröbsten Auflösung oder "Level0", eines Quadtrees entspricht.

Möchte man nun eine Zelle um einen Level verfeinern, so wird die Zelle mit der Seitenlänge dc in vier Zellen der Größe dc/4 unterteilt. Da es sich um ein rekursives Verfahren handelt, kann diese Unterteilung auf jede der vier neuen Zellen erneut angewendet werden, so dass schließlich eine Struktur ähnlich der rechten Darstellung in Fig. 2 entsteht. Diese veranschaulicht, dass durch die Verwendung eines Quadtrees die Erdoberfläche zu verschiedenen Detailgraden abgetastet werden kann, um z.B. die Fehleranfälligkeit eines Abtastpunktes zu berücksichtigen. An dieser Stelle kommt auch wieder die oben erwähnte Fehlerfunktion ins Spiel; diese dient als Kriterium für die Entscheidung welcher individuelle Quadtree-Level einem Bodenpixel zugeordnet werden muss.

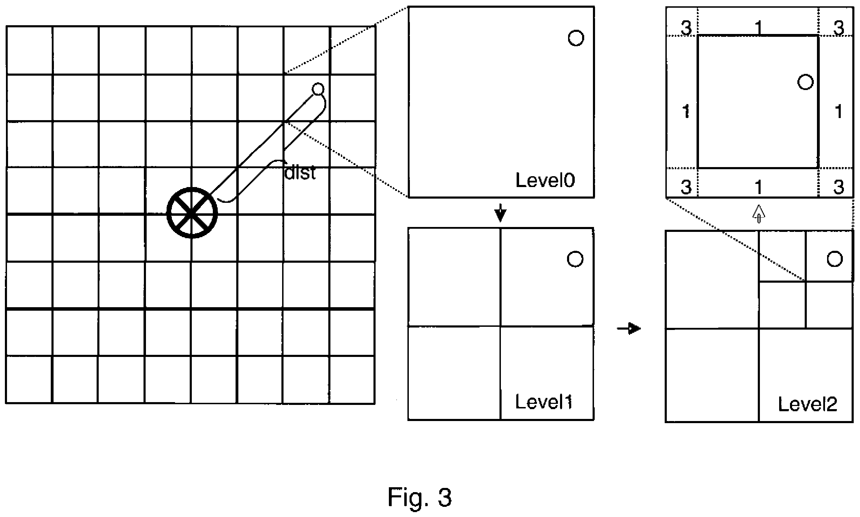

Möchte man nun ein eingehendes Bodenpixel in den Quadtree abbilden, so wird ein Verfahren verwendet, welches aus Fig. 3 deutlich wird. Um ein Bodenpixels in den Bodenpixelcontainer einzufügen, wird ausgehend von der Sensorposition die Distanz zu dem jeweiligen Bodenpixel ermittelt. Diese dient als Eingabe für eine Fehlerfunktion, welche aus dem zugrunde liegenden Fehler eine angemessene Zellgröße, z.B. eine Quadtree-Zellgröße berechnet. In diesem Beispiel soll die Quadtreeauflösung Level2 betragen, d.h. die ursprüngliche Zelle wird zweimal unterteilt.

Der letzte Schritt, in der Fig. 3 oben rechts behandelt die Randzonen. Ist das Maß der jeweiligen Abweichung groß genug, dass das jeweilige Bodenpixel eben so gut in der Nachbarzelle liegen könnte, so wird dieser kopiert und auch dort eingefügt. Die jeweiligen Zahlen beschreiben die Anzahl der betroffenen Nachbarzellen, sollte sich das Bodenpixel in den markierten Zonen einordnen.

Das Maß der Abweichung entspricht im Wesentlichen dem räumlichen Messfehler (Angabe z.B. in Meter) des individuellen Bodenpixels und lässt sich aus der Fehlerfunktion fe ableiten. Der höchste Level des Quadtrees (d.h. die kleinste Zelle) sollte so gewählt werden, dass ausgehend von dem zu unterstützenden Fehlerintervall (hier speziell der größte für diese Zelle noch zulässige Fehler) noch genügend Platz in der Zelle bleibt um ohne unnötiges Kopieren die Bodenpixel zu sammeln (siehe Abb. 3 rechts oben), denn eine zu kleine Wahl der Zelle führt zu teuren Kopien der Bodenpixel in die Nachbarzellen. D.h. eine sorgfältige Wahl einer diskreten Abbildung $QuadtreeLevel = f_{level}(f_e(dist))$ des Sensorfehlers zu den zu verwendenden Zellgrößen ist unbedingt notwendig. Eine beispielhafte Implementierung dieser Abbildung wäre $QuadtreeLevel = (L_{max} - 1) - \log_2(2 * f_e(dist))$, wobei $L_{max}$ dem maximal unterstützten Quadtreelevel entspricht. Das Maß der Abweichung $f_e(dist)$ wird mit 2 multipliziert, da dieser Wert einem Positionierungsfehler gleich einem Radius um eine angenäherte Position entspricht. Die wahre Position eines Punktes kann jedoch irgendwo innerhalb eines Kreises mit dem Radius $f_e(dist)$ liegen, daher muss die Zellgröße auch mindestens den Durchmesser dieses Kreises berücksichtigen.

Auf eine detaillierte Ermittlung der Randbreite auf Basis von Verteilungen und Wahrscheinlichkeiten soll hier nicht eingegangen werden.

Ist einmal die zugehörige Zellgröße ermittelt so ist zwischen folgenden Fällen zu unterscheiden:

1.) Die Zelle war ursprünglich leer: es wird entsprechend des Raumunterteilungsmechanismus unterteilt und der neue Wert eingefügt. Die Zelle kann im weiteren Verlauf weiter unterteilt werden, aber nur durch Einfügen eines neuen Wertes dessen Fehler (z.B. auf Grund kürzerer Distanz zum Sensor zum Zeitpunkt der Aufnahme) kleiner als der existierende ist. Der Abstand eines bereits gespeicherten Wertes zu einer neuen Position auf Grund der Gitterverschiebung spielt keine Rolle, da dadurch die Messgenauigkeit (d.h. der Fehler zum Zeitpunkt der Aufnahme) unverändert bleibt und im Nachhinein nicht korrigiert wird.

2.) In der Zelle ist bereits ein Wert niedrigeren Levels: es wird unterteilt und der neue Wert eingefügt. Alle weiteren daraus entstehenden Zellen erhalten den alten Wert; es wird also top-down kopiert.

3.) In der Zelle ist ein Wert gleichen Levels: es wird verglichen ob der neue Wert größer als der alte Wert ist. Falls ja, ersetzt dieser den alten Wert. Hiermit wird garantiert, dass die spätere Bodenfläche auch das höchste als Boden klassifizierte Hindernis berücksichtigt.

Wendet man dieses Verfahren auf alle Bodenpixel eines jeden Sensorbildes an dann kommt es automatisch zu einer Akkumulation der Werte über die Zeit; räumlich jedoch wird nicht akkumuliert sondern nur das als höchsten Punkt geltende Bodenpixel abgespeichert. Dabei wird der jeweilige Wert zeilzentriert abgespeichert, da seine exakte Position auf Grund der beschriebenen Messgenauigkeit nicht bekannt ist - es ist lediglich bekannt, dass er innerhalb der durch die Zelle vorgegebenen räumlichen Begrenzung liegen muss.

Eine weitere Berücksichtigung der Positionsgenauigkeit eines Punktes erfolgt durch eine zetiliche Gewichtung der einzelnen Zelleinträge. Grund hierfür ist die Position des Luftfahrzeugs, dessen Genauigkeit sich im lokal-gedätischen System an der des INS orientiert.

Als Beispiel soll ein Fehler von $0{,}2\dfrac{m}{s}$ angenommen werden, ein durchaus üblicher Positionierungsfehler einer INS. Dieser Wert drückt aus, dass nach bereits einer Sekunde die Position des Luftfahrzeugs bezüglich eines im Bodenpixelcotainer gespeicherten Punktes um $0{,}2m$ falsch sein kann. Um diesem Verhalten entgegenzuwirken wird jeder gespeicherte Punkt mit einer Lebensdauer und einer Gewichtung versehen. Der zeitlich gewichtete Wert $h_w$ innerhalb einer Quadtreezelle ermittelt sich damit aus $h_w = \sum_{i=0}^{t_{max}} \alpha_i * h_i$ mit den diskretisierten Gewichtungsfaktoren $\alpha_i$, den pro Sensorbild ermittelten Höhenwerten $h_i$ und der maximalen Anzahl an gespeicherten Zeitpunkten $t_{max}$. Die Wahl der Gewichtungsfunktion unterliegt der Bedingung $\sum_{i=0}^{t_{max}} \alpha_i = 1$. Eine derartige Gewichtung führt eine räumliche Verschiebung gemessener Punkte innerhalb des Bodenpixelcontainers mit sich und ist für eine Visualisierung des Höhenfeldes durchaus sinnvoll. Sollten diese Daten jedoch in eine georeferenzierte Datenbank zurückgeschrieben werden so ist eine Berücksichtigung dieser Gewichtung notwendig,

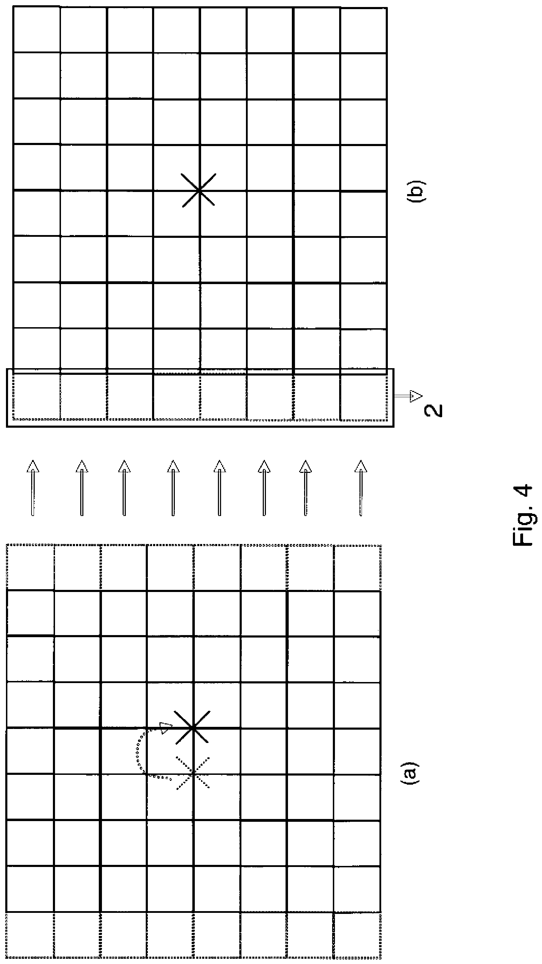

Eine zeitliche Akkumulation der Bodenpixel sowie die Tatsache, dass das Zentrum des Containers durch die quantifizierte Position des Sensors bestimmt wird (da mit einem diskreten Raster gearbeitet wird), impliziert letztendlich eine zeitliche Veränderung der Position des Bodenpixelcontainers. Da die Containergröße jedoch räumlich konstant ist, kommen im Falle eines Verschiebens des Containers jeweils neue Zellen hinzu, jedoch fallen auch alte Zellen heraus. Um einen Verlust dieser Daten zu vermeiden, werden diese im Falle einer Gitterbewegung in der angebundenen Elevationsdatenbank 2 gespeichert. Fig. 4 zeigt diese Situation, wobei sich das Gitter nach ausreichender Positionsänderung des Sensors mit der Schrittweite der vorgegebenen Diskretisierung bewegt, also der gröbsten Zellgröße nach Level0. Während die dunkelgrau gefärbten Zellen in Fig 4a neu hinzukommen, fallen die weißen Zellen heraus und werden in Fig. 4b in der Elevationsdatenbank 2 gespeichert.

Die Elevationsdatenbank 2 wird neben dem Abspeichern der Daten aus dem Bodenpixelcontainer ein zweites Mal herangezogen um die noch leer gebliebenen Zellen des Containers mit Elevationsdaten zu befüllen. Auf Grund der begrenzten Sicht eines Sensors, d.h. nicht nur in der Reichweite sondern auch in der Ausdehnung, d.h. im Öffnungswinkel, wird jeweils nur ein Bereich der Fläche, die der Bodenpixelcontainers darstellt, mit Sensordaten gefüllt werden. Dieser Bereich vergrößert sich zwar durch die zeitliche Akkumulation der Sensordaten, insbesondere durch die Bewegung des Luftfahrzeugs, dennoch ist es sehr wahrscheinlich, dass Bereiche der Fläche, die der Bodenpixelcontainers darstellt, leer bleiben. Um eine Unabhängigkeit des Öffnungswinkels für die Visualisierung von dem jeweiligen Sensoröffnungswinkel zu erreichen, werden leere Bereiche mit Elevationsdaten aus der Elevationsdatenbank 2 gefüllt, was später zu einer visuellen Datenfusion von Sensor- und Elevationsdatenbankdaten führen wird.

Man beachte, dass sich in der Elevationsdatenbank 2 auch schon bereits zu einem früheren Zeitpunkt abgespeicherte Sensordaten befinden können.

Die Daten des gefüllten Bodenpixelcontainers werden letztendlich an die Visualisierungsalgorithmen gesendet, welche dann für die Generierung von darstellbarer Geometrie und auch deren Visualisierung verantwortlich sind. Von Vorteil ist auch hier die Datenhaltung innerhalb des besprochenen Quadtrees; so lassen sich durch eine Restriktion des zu betrachtenden Quadtreelevels sehr einfach diverse Level-of-Detail (LOD) Algorithmen realisieren.

Die Elevationsdatenbank 2 nach Fig. 1 besteht zu Beginn einer Aufzeichnung nur aus bereits vorhandenen Elevationsdaten, welche in einer bestimmten Auflösung vorliegen. Während der Sensordatenaufzeichnung, d.h. während des Fluges, werden nun diese Daten herangezogen um mit dem Bodenpixelcontainers 3 zu interagieren. Sie dienen hier, wie bereits erläutert, zum Einen zur Vervollständigung des nur partiell gefüllten, vom Bodenpixelcontainer repräsentierten Gitters, und zum Anderen zum Abgleich und Update durch die Sensordaten.

Das Auslesen der Elevationsdaten aus der Datenbank wird durch den Bodenpixelcontainers veranlasst, d.h. für jede leere Zelle des Bodenpixelcontainers wird die zugehörige WGS84 Position berechnet, welche als Referenz für den Datenbankzugriff dient. Als Resultat der Datenbankabfrage erhält man einen Höhenwert, welcher entsprechend seiner Genauigkeit im Bodenpixelcontainer abgelegt wird. Auch hier wird den Elevationsdaten explizit gestattet das vorhandene Gitter des Bodenpixelcontainers weiter zu unterteilen um möglichst der Abtast- und Fehlerrate der Elevationsdatenbankdaten gerecht zu werden.

Das Schreiben der Elevationsdaten wird ebenfalls vom Bodenpixelcontainer gesteuert. Hier werden alle Sensordaten, welche entweder eine höheren Genauigkeit als der bisher in der Datenbank existierenden Werte aufweisen, oder bei gleicher Genauigkeit höher als die vorhandenen Punkte sind, in der Datenbank gespeichert. Die Gestaltung der Datenbank sei hierbei flexibel, d.h. ob die Daten ersetzt oder nur hinzugefügt werden soll dem Datenbankdesign überlassen sein.

Fällt der Sensor aus, so werden alle Zellen des Bodenpixelcontainers mit Elevationsdaten aus der Datenbank belegt, was einem sogenannten Synthetic Vision System entsprechen würde.

Die Visualisierung besteht aus zwei Modulen und folgt nach Fig. 1 in der Verarbeitungskette direkt dem Bodenpixelcontainer 3. Bisher wurden die Daten gemäß ihrer Messgenauigkeit gespeichert, für eine Visualisierung jedoch ist diese Repräsentation ungeeignet, da für die Darstellung einer Bodenfläche möglichst eine geschlossene Fläche wünschenswert ist um den Piloten nicht mit hochfrequenten, sich verändernden Punktwolken abzulenken.

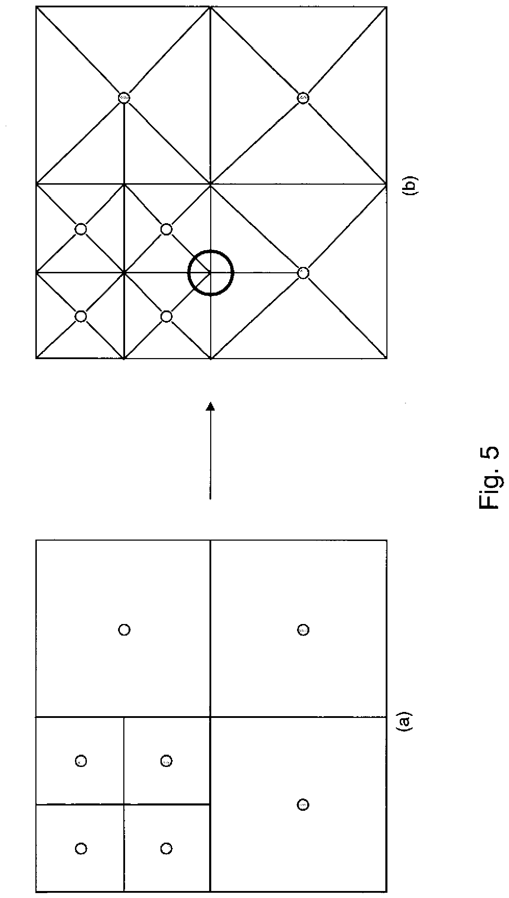

Der erste Schritt der Visualisierung sieht eine Vorverarbeitung der Daten des Bodenpixelcontainers, d.h. des Quadtrees, vor. In diesem Schritt wird aus den Elevationsdaten ein zusammenhängendes Dreiecksgitter erzeugt, welches bis auf Ausnahme gewollter Löcher eine geschlossene Fläche repräsentiert. Da es sich bei den Daten des Bodenpixelcontainers um einen sogenannten unbeschränkten Quadtree handelt, d.h. die Levels benachbarter Zellen können sich größer 1 unterscheiden, wird hier mit sogenannten Trianglefans gearbeitet. Ein Trianglefan besteht aus einem Mittelpunkt und verschiedenen umliegenden Eckpunkten, welche zur Dreiecksgenerierung herangezogen werden und eignet sich besonders gut um die aufgespannte Fläche einer Quadtreezelle zu repräsentieren. Fig. 5 illustriert diese Geometriegenerierung einer Triangulation der Daten des Bodenpixelcontainers. Die zellzentierten Werte bilden jeweils den Mittelpunkt eines Trianglefans. Die Geschlossenheit der Fläche wird durch Konnektivität aller benachbarten Zellen garantiert, wie z.B. der eingekreiste Vertex.

Der zweite Schritt besteht aus der Visualisierung der berechneten Bodenfläche. Diese kann wahlweise als Dreicksnetz in der Drahtgitterdarstellung visualisiert werden oder, um bestehende Unebenheiten noch weiter hervorzuheben, auch als beleuchtete, eingefärbte Fläche.

Die Visualisierung erfolgt aus einer beliebigen Perspektive, wobei hier Flugzustandsdaten getrennt von den Sensordaten behandelt werden. D.h. dass zu berücksichtigende Änderungen der Fluglagedaten des Luftfahrzeugs, wie z.B. Bewegungen und Richtungsänderungen nicht notwendigerweise mit der meist niedrigeren Frequenz der Sensordaten und damit auch der Bodenflächengenerierung dargestellt werden müssen.

## Patentansprüche

1. Vorrichtung zur Darstellung von Gelände auf einer Anzeigevorrichtung eines Flugkörpers, umfassend ein Synthetic Vision System mit einer Gelände- und Hindernisdatenbank,
   ein Enhanced Vision System mit einem Sensor (1) zur Aufnahme von Geländedaten,
   einen Höhen- und Positionssensor (5) zur Bestimmung der Flugzustandsdaten eine Anzeigevorrichtung (6),
   einen Fusionsprozessor (3) zur Fusionierung der Daten des Synthetic Vision Systems und des Enhanced Vision Systems, wobei die von dem Enhanced Vision System aufgenommenen Datenpunkte gespeichert werden,
   einen Grafikprozessor (4, 8), welcher die mittels des Fusionsprozessors (3) erzeugten Geländedaten an die Anzeigevorrichtung (6) sendet unter Berücksichtigung der mittels des Höhen- und Positionssensors (5) bestimmten Flugzustandsdaten,

**dadurch gekennzeichnet, dass**.

der Fusionsprozessor (3) ein adaptives Gitter darstellt, welches durch seine Zellen einer diskreten Abtastung der Erdoberfläche entspricht,

der Fusionsprozessor (3) eingerichtet ist zur Speicherung der Datenpunkte in einem räumlich konstant definierten Bereich um ein festgelegtes Zentrum, wobei das Zentrum dieses Bereichs die Position des Sensors bildet und

der Fusionsprozessor (3) beim Einfügen eines Datenpunktes in das Gitter eine Fehlerfunktion verwendet, wobei die Fehlerfunktion aus dem Abstand des Datenpunktes zur in das Gitter projizierten Sensorposition eine Abschätzung für die Größe der jeweiligen Zelle liefert, in welche das Pixel gespeichert wird.

## Claims

1. A device for showing terrain on a display device of an airborne vehicle, comprising

   a synthetic vision system having a terrain- and obstacle database,

   an enhanced vision system having a sensor (1) for capturing terrain data,

   an altitude- and position sensor (5) for determining the flight-status data,

   a display device (6),

   a fusion processor (3) for fusing data from the synthetic vision system and the enhanced vision system, the data points captured by the enhanced vision system being stored,

   a graphics processor (4, 8), which sends the terrain data generated by the fusion processor (3) to the display device (6) while taking into account the flight-status data determined by the altitude- and position sensor (5),

   **characterized in that**

   the fusion processor (3) shows an adaptive grid which, by means of its cells, corresponds to discrete scanning of the earth's surface,

   the fusion processor (3) is configured to store the data points in a spatially constantly defined region about a fixed center, the center of this region forming the position of the sensor and the fusion processor (3) using an error function during insertion of a data point into the grid, the error function providing an estimation of the size of the relevant cell, in which the pixel is stored, from the distance between the data point and the sensor position projected into the grid.

## Revendications

1. Dispositif de représentation topographique sur un dispositif indicateur d'un engin volant, comprenant

un Synthetic Vision System avec une base de données topographique et d'obstacles, un Enhanced Vision System avec un capteur (1) pour l'enregistrement de données topographiques,

un capteur d'altitude et de positionnement (5) pour la détermination des données d'état de vol d'un dispositif indicateur (6),

un processeur de fusion (3) pour la fusion des données du Synthetic Vision System et du Enhanced Vision System, les points de données enregistrés par le Enhanced Vision System étant mis en mémoire,un processeur graphique (4, 8), qui envoie au dispositif indicateur (6) les données topographiques produites au moyen du processeur de fusion (3) en prenant en compte des données d'état de vol déterminées au moyen du capteur d'altitude et de positionnement (5),

**caractérisé en ce que**

le processeur de fusion (3) représente un quadrillage adaptatif qui, par ses cellules, correspond à un balayage discret de la surface terrestre,

le processeur de fusion (3) est aménagé pour la mise en mémoire des points de données dans une zone définie de façon constante dans l'espace autour d'un centre défini, le centre de cette zone formant la position du capteur, et le processeur de fusion (3) utilisant une fonction d'erreur lors de l'insertion d'un point de donnée dans le quadrillage, la fonction d'erreur fournissant, à partir de la distance entre le point de donnée et la position de capteur projetée dans le quadrillage, une estimation de la taille de la cellule respective dans laquelle le pixel est mis en mémoire.

Fig. 1

Fig. 2

Fig. 3

Fig. 4

EP 2 577 614 B1

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008018906 A
- US 7148861 B2
- EP 1084380 B1
- US 20100026525 A1
- US 20070297696 A1
- US 20090040070 A1